(19) Europäisches Patentamt
European Patent Office
Office européen des brevets

(11) **EP 4 656 406 A1**

(12) **EUROPEAN PATENT APPLICATION**
published in accordance with Art. 153(4) EPC

(43) Date of publication:
03.12.2025  Bulletin 2025/49

(51) International Patent Classification (IPC):
*B43K 7/08* (2006.01)    *A45D 34/04* (2006.01)
*B43K 8/03* (2006.01)

(21) Application number: 24747324.2

(52) Cooperative Patent Classification (CPC):
**A45D 34/04; B43K 7/08; B43K 8/03**

(22) Date of filing: **24.01.2024**

(86) International application number:
**PCT/JP2024/001981**

(87) International publication number:
**WO 2024/157997 (02.08.2024 Gazette 2024/31)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 26.01.2023   JP 2023010328
26.01.2023   JP 2023010341

(71) Applicant: **Mitsubishi Pencil Company, Limited**
**Tokyo 140-8537 (JP)**

(72) Inventors:
• **TAKADA, Koji**
**Tokyo 140-8537 (JP)**
• **OGURA, Kosuke**
**Tokyo 140-8537 (JP)**
• **ICHIKAWA, Shuji**
**Tokyo 140-8537 (JP)**

(74) Representative: **Vossius & Partner**
**Patentanwälte Rechtsanwälte mbB**
**Siebertstrasse 3**
**81675 München (DE)**

(54) **LIQUID RESERVOIR TUBE CONTAINING LIQUID TO BE SUPPLIED**

(57)     Provided is a novel liquid reservoir tube containing a liquid to be supplied, the liquid reservoir tube having a follower which can bring about satisfactory impact resistance. This liquid reservoir tube containing a liquid to be supplied includes a liquid supply part 10 and a liquid reservoir part 20, wherein the liquid reservoir part 20 accommodates, in the following order from the liquid supply part 10 side, a liquid 30 to be supplied, which is in contact with the liquid supply part 10, and a multilayer follower 40 constituted of a plurality of layers. The multilayer follower 40 at least includes a first follower 42 and a second follower 44, the first follower 42 being present further toward the liquid supply part 10 side than the second follower 44. The first follower 42 has a degree of viscosity difference between itself and the second follower 44 of 7% or greater, the degree of viscosity difference being a difference calculated from viscosities measured under the conditions of 25°C and a shear rate of 50 s$^{-1}$.

Fig. 1

**Description**

FIELD

The present invention relates to a liquid reservoir tube containing a liquid to be supplied.

BACKGROUND

Conventionally, in storage tubes for supplying and storing a liquid to be supplied such as an ink for writing instruments, a liquid cosmetic, or a liquid fuel, a follower has been used to suppress, for example, evaporation of the liquid to be supplied, or adhesion of the liquid to be supplied onto the inner wall of the storage tubes. The follower moves toward a supply portion for the liquid to be supplied such that it follows reduction of the liquid to be supplied due to consumption of the liquid to be supplied.

PTL 1 discloses an ink follower in a water-based ballpoint pen including an ink storage tube having a cylindrical shape with an inner diameter of 3 mm or more or a similar shape, where two types of gel-like materials having different viscosity characteristics due to a difference in the viscosity of the base oil are used in combination.

PTL 2 discloses a writing instrument in which an oil-based ink for writing instruments is stored in an ink storage tube; a nib is attached to an ink outflow portion on one end side of the ink storage tube; and an ink follower is stored in the ink storage tube such that it is in contact with the oil-based ink. The ink follower is composed of at least a first layer in contact with the oil-based ink, and a second layer in contact with the first layer. The first layer is a water-based gel-like substance, and the second layer is a hardly volatile or non-volatile organic liquid.

PTL 3 discloses an ink follower composition at least including: one, or a mixture of two or more, selected from hydrocarbon-based organic solvents with a specific gravity in the range of 0.8 to 0.9; a gelling agent; and particles that do not substantially dissolve or swell in the hydrocarbon-based organic solvent(s) and have a specific gravity smaller than that/those of the hydrocarbon-based organic solvent(s).

PTL 4 discloses a follower composition for a cosmetic applicator, the follower composition including at least a base oil and 3.5 to 8 mass% of an elastomer containing a styrene structure.

PTL 5 discloses a cosmetic applicator including: a cylindrical filling chamber; an application portion attached to a tip of the cylindrical filling chamber; a liquid cosmetic directly filled into the cylindrical filling chamber, which communicates with the application portion directly or via an interposed member; and a liquid follower that is in contact with the liquid cosmetic, which liquid follower moves such that it follows reduction of the liquid cosmetic due to consumption of the liquid cosmetic, and is different from the liquid cosmetic in hue, wherein the volume ratio of the follower to the liquid cosmetic is 0.5 or more.

PTL 6 discloses a fuel container including: a container main body including an outlet; a fuel provided inside the container main body; and a high-viscosity liquid provided such that it is in contact with the fuel on the side opposite to the outlet side in the container main body.

[CITATION LIST]

[PATENT LITERATURE]

[PTL 1] Japanese Unexamined Patent Publication (Kokai) No. H6-328890
[PTL 2] Japanese Unexamined Patent Publication (Kokai) No. 2001-158869
[PTL 3] Japanese Unexamined Patent Publication (Kokai) No. 2005-239918
[PTL 4] Japanese Unexamined Patent Publication (Kokai) No. 2017-165670
[PTL 5] Japanese Unexamined Patent Publication (Kokai) No. 2016-198395
[PTL 6] Japanese Unexamined Patent Publication (Kokai) No. 2004-281340

SUMMARY

[TECHNICAL PROBLEM]

<<Object of First Aspect of Present Invention>>

The first aspect of the present invention provides a novel liquid reservoir tube containing a liquid to be supplied, the liquid reservoir tube including a follower capable of providing good impact resistance.

<<Object of Second Aspect of Present Invention>>

The present invention provides a novel liquid reservoir tube containing a liquid to be supplied that achieves good drainability even after an impact and suppresses inversion of a follower.

[SOLUTION TO PROBLEM]

<<First Aspect of Present Invention>>

As a result of extensive studies, the present inventors have found that the above problems can be solved by the following solution, and thus have completed the first aspect of the present invention. More specifically, the first aspect of the present invention is as described below:

<Aspect Al> A liquid reservoir tube containing a liquid to be supplied, the liquid reservoir tube including a liquid supply part and a liquid reservoir part, wherein

the liquid reservoir part includes: a liquid to be supplied in contact with the liquid supply part; and a multi-layer follower composed of a plurality of layers which are stored in the stated order from the liquid supply part side, the multi-layer follower includes at least a first follower and a second follower, the first follower being present on the liquid supply part side with respect to the second follower,
a viscosity difference ratio of the first follower with respect to the second follower is 7% or more, and
the viscosity difference ratio is calculated based on viscosity measured under conditions of a temperature of 25°C and a shear rate of 50 $s^{-1}$.

<Aspect A2> The liquid reservoir tube containing a liquid to be supplied according to Aspect A1, wherein a viscosity difference ratio of the first follower with respect to the second follower is 1% or more, the viscosity difference ratio being measured under conditions of a temperature of 25°C and a shear rate of 100 $s^{-1}$.
<Aspect A3> The liquid reservoir tube containing a liquid to be supplied according to Aspect A1 or A2, wherein the first follower is in contact with the liquid to be supplied.
<Aspect A4> The liquid reservoir tube containing a liquid to be supplied according to any one of Aspects A1 to A3, wherein the second follower is in contact with the first follower.
<Aspect A5> The liquid reservoir tube containing a liquid to be supplied according to any one of Aspects Al to A4, wherein the multi-layer follower is composed of the first follower and the second follower.
<Aspect A6> The liquid reservoir tube containing a liquid to be supplied according to any one of Aspects A1 to A5, wherein an interface between the followers constituting the multi-layer follower is visible.
<Aspect A7> The liquid reservoir tube containing a liquid to be supplied according to any one of Aspects A1 to A6, wherein the first follower contains a first base oil, and the first base oil is at least one selected from the group consisting of silicone oil and fluorine oil.
<Aspect A8> The liquid reservoir tube containing a liquid to be supplied according to any one of Aspects A1 to A7, wherein the second follower contains a second base oil, and the second base oil is at least one selected from the group consisting of mineral oil, synthetic hydrocarbon oil, ester oil, and polyglycol oil.
<Aspect A9> The liquid reservoir tube containing a liquid to be supplied according to Aspect A8, wherein the second base oil is at least one selected from the group consisting of polyolefin, liquid paraffin, and mineral oil.
<Aspect A10> The liquid reservoir tube containing a liquid to be supplied according to any one of Aspects A1 to A9, wherein the first follower further contains a first thickening agent being at least one selected from the group consisting of silica and inorganic salt particles.
<Aspect A11> The liquid reservoir tube containing a liquid to be supplied according to any one of Aspects A1 to A10, wherein the second follower contains a second thickening agent being at least one selected from the group consisting of elastomers.

<<Second Aspect of Present Invention>>

The present inventors have made intensive studies, have found that the above problems can be solved by the following solution, and thus have completed the second aspect of the present invention. Specifically, the second aspect of the present invention is as described below:

<Aspect B1> A liquid reservoir tube containing a liquid to be supplied, the liquid reservoir tube including a liquid supply part and a liquid reservoir part, wherein

the liquid reservoir part includes: a liquid to be supplied in contact with the liquid supply part; and a multi-layer follower composed of a plurality of layers which are stored in the stated order from the liquid supply part side, the multi-layer follower includes at least a first follower and a second follower, the first follower being present on the liquid supply part side with respect to the second follower,

the second follower is in contact with the first follower, and

a meniscus height of an interface between the first follower and the second follower is 3 mm or less.

<Aspect B2> The liquid reservoir tube containing a liquid to be supplied according to Aspect B1, wherein the first follower is in contact with the liquid to be supplied.

<Aspect B3> The liquid reservoir tube containing a liquid to be supplied according to Aspect B1 or B2, wherein the multi-layer follower is composed of the first follower and the second follower.

<Aspect B4> The liquid reservoir tube containing a liquid to be supplied according to any one of Aspects B1 to B3, wherein an interface between the followers constituting the multi-layer follower is visible.

<Aspect B5> The liquid reservoir tube containing a liquid to be supplied according to any one of Aspects B1 to B4, wherein the first follower contains a first base oil, and the first base oil is at least one selected from the group consisting of silicone oil and fluorine oil.

<Aspect B6> The liquid reservoir tube containing a liquid to be supplied according to any one of Aspects B1 to B5, wherein the second follower contains a second base oil, and the second base oil is at least one selected from the group consisting of mineral oil, synthetic hydrocarbon oil, ester oil, and polyglycol oil.

<Aspect B7> The liquid reservoir tube containing a liquid to be supplied according to Aspect B6, wherein the second base oil is at least one selected from the group consisting of polyolefin, liquid paraffin, and mineral oil.

<Aspect B8> The liquid reservoir tube containing a liquid to be supplied according to any one of Aspects B1 to B7, wherein the first follower further contains a first thickening agent being at least one selected from the group consisting of silica and inorganic salt particles.

<Aspect B9> The liquid reservoir tube containing a liquid to be supplied according to any one of Aspects B1 to B8, wherein the second follower contains a second thickening agent being at least one selected from the group consisting of elastomers.

<Aspect B 10> A method of manufacturing the liquid reservoir tube containing a liquid to be supplied according to any one of Aspects B1 to B9, the method including:

filling the liquid to be supplied, the first follower, and the second follower into the liquid reservoir part in the stated order such that a gap between the first follower and the second follower is 15 mm or less; and

subjecting the liquid reservoir tube to centrifugal processing such that a centrifugal force is applied from the second follower toward the liquid to be supplied.

[ADVANTAGEOUS EFFECTS OF INVENTION]

<<Effects of First Aspect of Present Invention>>

According to the first aspect of the present invention, it is possible to provide a novel liquid reservoir tube containing a liquid to be supplied, the liquid reservoir tube including a follower capable of providing good impact resistance.

<<Effects of Second Aspect of Present Invention>>

According to the second aspect of the present invention, it is possible to provide a novel liquid reservoir tube containing a liquid to be supplied that achieves good drainability even after an impact and suppresses inversion of a follower.

BRIEF DESCRIPTION OF DRAWINGS

FIG. 1 is a side cross-sectional view of a liquid reservoir tube containing a liquid to be supplied of the first aspect of the present invention.

FIG. 2 is a side cross-sectional view of a liquid reservoir tube containing a liquid to be supplied of the second aspect of the present invention.

DESCRIPTION OF EMBODIMENTS

<<First Aspect of Present Invention: Liquid Reservoir Tube Containing Liquid to be supplied >>

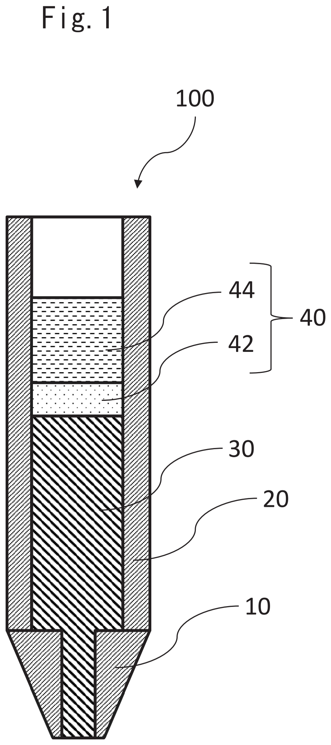

As illustrated in FIG. 1, a liquid reservoir tube containing a supply liquid of the first aspect of the present invention includes a liquid supply part 10 and a liquid reservoir part 20, wherein

the liquid reservoir part 20 includes: a liquid to be supplied 30 in contact with the liquid supply part 10; and a multi-layer follower 40 composed of a plurality of layers which are stored in the stated order from the liquid supply part 10 side, the multi-layer follower 40 includes at least a first follower 42 and a second follower 44, the first follower 42 being present on the liquid supply part 10 side with respect to the second follower 42, a viscosity difference ratio of the first follower 42 with respect to the second follower 44 is 7% or more, and the viscosity difference ratio is calculated based on viscosity under conditions of a temperature of 25°C and a shear rate of 50 s$^{-1}$.

The present inventors have found that, when the viscosity difference ratio of the first follower and the second follower under conditions of a temperature of 25°C and a shear rate of 50 s$^{-1}$ is as described above, good impact resistance can be exerted. While not wishing to be bound by theory, it is considered that, this is because, due to the above-mentioned viscosity difference ratio, when an impact is applied, an impact wave caused by the impact is reflected and absorbed at the interface between the followers having different viscosity levels, thereby mitigating the effect of the impact.

A viscosity difference ratio of the first follower with respect to the second follower, which is calculated based on viscosity measured under conditions of a temperature of 25°C and a shear rate of 50 s$^{-1}$, may be 7% or more, 9% or more, 10% or more, 13% or more, 15% or more, 17% or more, 20% or more, 23% or more, 25% or more, 28% or more, 30% or more, 33% or more, or 35%, or may be 70% or less, 65% or less, 60% or less, 55% or less, or 50% or less.

The viscosity difference ratio of the first follower with respect to the second follower, which is measured under the above-mentioned conditions, can be calculated from the expression given below.

$$\{|1 - (\text{the viscosity of the first follower}) / (\text{the viscosity of the second follower})|\} \times 100$$

A viscosity difference ratio of the first follower with respect to the second follower, which is calculated based on viscosity measured under conditions of a temperature of 25°C and a shear rate of 100 s$^{-1}$, may be 1% or more, 3% or more, 5% or more, 7% or more, 9% or more, 10% or more, 13% or more, 15% or more, 17% or more, 20% or more, 23% or more, 25% or more, 28% or more, 30% or more, 33% or more, or 35%, or may be 70% or less, 65% or less, 60% or less, 55% or less, or 50% or less.

For example, the liquid reservoir tube containing a liquid to be supplied of the present invention can be manufactured by filling the liquid to be supplied, the first follower, and the second follower into the liquid reservoir part in the stated order and then subjecting the liquid reservoir tube to centrifugal processing such that a centrifugal force is applied from the second follower toward the liquid to be supplied.

<<Second Aspect of Present Invention: Liquid Reservoir Tube Containing Liquid to be supplied >>

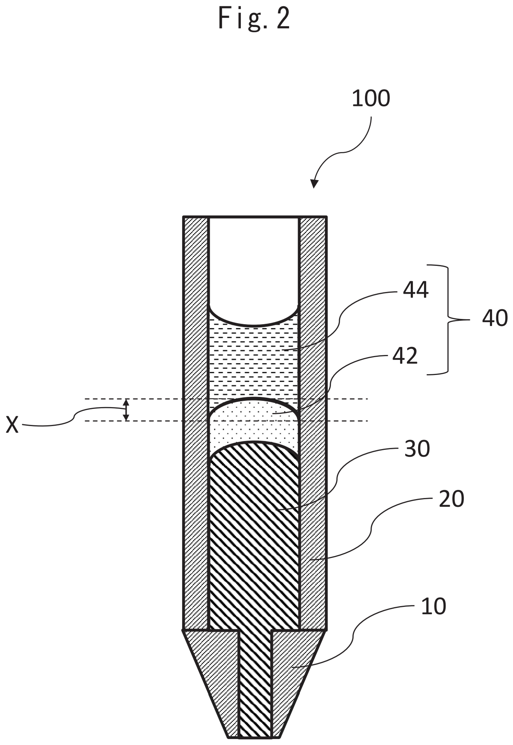

As illustrated in FIG. 2, a liquid reservoir tube 100 containing a liquid to be supplied of the second aspect of the present invention includes a liquid supply part 10 and a liquid reservoir part 20, wherein

the liquid reservoir part 20 includes: a liquid to be supplied 30 in contact with the liquid supply part 10; and a multi-layer follower 40 composed of a plurality of layers which are stored in the stated order from the liquid supply part 10 side, the multi-layer follower 40 includes at least a first follower 42 and a second follower 44, the first follower 42 being present on the liquid supply part 10 side with respect to the second follower 42, the second follower 44 is in contact with the first follower 42, and a meniscus height X of an interface between the first follower 42 and the second follower 44 is 3 mm or less.

In the present invention, as illustrated in FIG. 2, the term "meniscus height" refers to a height X of a convex portion of an interface between the first follower 42 and the second follower 44 with respect to a plane surrounded by a line at which the interface and the liquid reservoir tube are in contact with each other. The meniscus height can be measured with a caliper. When the storage tube is a non-transparent storage tube, such as paper, which is not visually recognizable, the meniscus height can be measured by analyzing an image obtained by an X-ray transmission device (μnRay7600F manufactured by Matsusada Precision Inc.).

The meniscus height may be 3 mm or less, 2 mm or less, or 1 mm or less.

In the liquid reservoir tube containing a liquid to be supplied, there may be required good drainability, specifically, a property of scraping off the liquid to be supplied adhering to the inner wall of the liquid reservoir tube during movement of the follower in accordance with consumption of the liquid to be supplied, and, in a case where a plurality of layers of followers are provided, a property of preventing inversion of the positions of the followers when the liquid reservoir tube is stored upward. However, the present inventors have found that, even when a conventional liquid reservoir tube containing a liquid to be supplied has such properties at the time of manufacture, those properties may be impaired after an impact such as a drop impact.

The present inventors have found that the above-mentioned problem is caused by the meniscus height of the interface between the first follower and the second follower, and have found that the above-mentioned problem can be solved by setting the meniscus height within the above-mentioned range.

<<Each Constituent Element in First and Second Aspects of Present Invention>>

Each constituent element in the first and second aspects of the present invention will be described below.

<Liquid Supply Part and Liquid Reservoir Part>

The liquid supply part is a member for supplying the liquid to be supplied to the outside of the liquid reservoir tube. The liquid reservoir part is a member for storing the liquid to be supplied. The liquid supply part and the liquid reservoir part may be coupled to each other.

The material forming the liquid reservoir part is not particularly limited, and a resin such as polypropylene, paper, metal, or the like may be used. Further, examples of the material may include biomass plastic using bio-based resources such as corn and sugarcane and biodegradable plastic using a soil-biodegradable resin or a marine-biodegradable resin.

For example, when the liquid reservoir tube containing a liquid to be supplied of the present invention is a refill for a writing instrument, the liquid supply part and the liquid reservoir part of the present invention may be a writing portion and an ink storage portion, specifically, a nib (tip) and an ink storage tube of a ballpoint pen, respectively. Herein, the ink storage tube may be made of plastic, metal, or paper.

<Liquid to be supplied>

The liquid to be supplied may be any other optional liquid to be supplied, and may be ink, liquid fuel, liquid cosmetics, or the like.

Further, the ink may be water-based ink or oil-based ink, and the water-based ink may be gel ink.

Herein, generally, the water-based ink refers to ink that contains at least water and a colorant, the oil-based ink refers to ink that contains at least an organic solvent and a colorant, and the gel ink refers to water-based ink that further contains a viscosity modifier.

<Multi-Layer Follower>

The multi-layer follower is a follower formed by a plurality of layers. The multi-layer follower includes at least the first follower and the second follower.

In particular, when the first base oil is silicone oil or fluorine oil, the first follower is preferably in contact with the liquid to be supplied in view of achieving an advantage of suppressing the remaining of the liquid to be supplied on the wall surface of the liquid reservoir tube and an advantage of suppressing the mixing with the liquid to be supplied.

The second follower may be in contact with the first follower. In particular, in the second aspect of the present invention, the second follower is in contact with the first follower.

In particular, the multi-layer follower may be formed of the first follower and the second follower.

The interface between the followers forming the multi-layer follower may not be clearly visible like gradation, or may be clearly visible. Further, at least one of the followers may be colored with a coloring material that does not dissolve or elute in the liquid to be supplied. When the plurality of followers are colored, the colors are preferably different from each other in view of design and visibility. For example, the interface that is clearly visible can be obtained by selecting base oils forming the adjacent followers in a combination so that the base oils are immiscible with each other. Examples of the combination of the miscible base oils include a combination of the same type of base oil, a combination of polyglycol oil and ester oil, a combination of synthetic hydrocarbon oil and mineral oil, a combination of ester oil and mineral oil, a combination of synthetic hydrocarbon oil and ester oil, and the like. In contrast, examples of the combination of the immiscible oils include a combination of silicone oil and mineral oil, a combination of silicone oil and synthetic hydrocarbon oil, a combination of silicone oil and ester oil, a combination of silicone oil and polyglycol oil, a combination of silicone oil and fluorine oil, a combination of fluorine oil and mineral oil, a combination of fluorine oil and synthetic hydrocarbon oil, a combination of fluorine oil and ester oil, a combination of fluorine oil and polyglycol oil, and the like.

(First Follower)

The first follower is a follower present on the liquid supply part side with respect to the second follower.

In particular, the first follower preferably contains the first base oil being at least one selected from the group consisting of silicone oil and fluorine oil in view of suppressing the remaining of the liquid to be supplied on the wall surface of the liquid reservoir tube and suppressing the mixing with the liquid to be supplied. Examples of the silicone oil may include dimethyl silicone oil, methylphenyl silicone oil, and the like.

Further, the first follower may further contain the first thickening agent, particularly, the first thickening agent being at least one selected from the group consisting of silica and inorganic salt particles.

Examples of the inorganic salt particles may include a viscosity-imparting mineral such as kaolinite, smectite, sericite, illite, glauconite, chlorite, talc, and zeolite, and water-insoluble metal soap such as lithium stearate, aluminum stearate, and sodium stearate.

A content rate of the first thickening agent with respect to the mass of the first follower may be 1 mass% or more, 2 mass% or more, 3 mass% or more, or 4 mass% or more, or may be 10 mass% or less, 9 mass% or less, 8 mass% or less, 7 mass% or less, or 6 mass% or less.

The first follower can be obtained by kneading each material thereof by a kneading means such as a planetary mixer and a roll mill while heating.

In particular, in the first aspect of the present invention, the viscosity of the first follower, which is measured under conditions of a temperature of 25°C and a shear rate of $50 \text{ s}^{-1}$, is not particularly limited as long as the above-mentioned viscosity difference ratio is satisfied, and may be 2 Pa·s or more, 3 Pa·s or more, 4 Pa·s or more, 5 Pa·s or more, 6 Pa·s or more, 7 Pa·s or more, 8 Pa·s or more, or 9 Pa·s or more, or may be 20 Pa·s or less, 18 Pa·s or less, 16 Pa·s or less, 15 Pa·s or less, 14 Pa·s or less, 13 Pa·s or less, or 12 Pa·s or less, for example.

In particular, in the first aspect of the present invention, the viscosity of the first follower, which is measured under conditions of a temperature of 25°C and a shear rate of $100 \text{ s}^{-1}$ is not particularly limited, and may be 1 Pa·s or more, 2 Pa·s or more, 3 Pa·s or more, 4 Pa·s or more, 5 Pa·s or more, 6 Pa·s or more, 7 Pa·s or more, 8 Pa·s or more, or 9 Pa·s or more, or may be 20 Pa·s or less, 18 Pa·s or less, 16 Pa·s or less, 15 Pa·s or less, 14 Pa·s or less, 13 Pa·s or less, or 12 Pa·s or less, for example.

The viscosity can be increased by increasing the content rate of the first thickening agent, for example.

(Second Follower)

The second follower is a follower present on a side opposite to the liquid supply part with respect to the first follower.

In particular, the second follower preferably contains the second base oil being at least one selected from the group consisting of mineral oil, synthetic hydrocarbon oil, ester oil, and polyglycol oil in view of obtaining a gas barrier property.

Examples of the mineral oil may include spindle oil, petroleum jelly, and the like.

Examples of the synthetic hydrocarbon oil may include polyolefin such as polybutene, olefin oligomers, aromatic hydrocarbons, liquid paraffin, and the like.

Ester oil and polyglycol oil that are commonly used as a follower may be used.

As the second base oil, in particular, polyolefin, liquid paraffin, or mineral oil is preferably used.

The second follower may further contain the second thickening agent, particularly, the second thickening agent that is different from the first thickening agent, more particularly, the second thickening agent being at least one selected from the group consisting of elastomers.

Examples of the elastomers may include olefin-based thermoplastic elastomers such as ethylene-ethylene butylene-ethylene block copolymers, styrene-based thermoplastic elastomers such as styrene-ethylene butylene-styrene block copolymers, vinyl chloride-based thermoplastic elastomers, polyamide-based thermoplastic elastomers, polyester-based thermoplastic elastomers, polyurethane-based thermoplastic elastomers, and the like.

A content rate of the second thickening agent with respect to the mass of the second follower may be 1 mass% or more, 2 mass% or more, 3 mass% or more, or 4 mass% or more, or may be 10 mass% or less, 9 mass% or less, 8 mass% or less, 7 mass% or less, or 6 mass% or less.

A ratio of the filling length of the second follower with respect to the filling length of the first follower may be 0.05 or more, 0.1 or more, 0.2 or more, 0.3 or more, 0.5 or more, 0.7 or more, 1.0 or more, 1.3 or more, 1.5 or more, 1.7 or more, 2.0 or more, or 2.3, or may be 15.0 or less, 14.0 or less, 13.0 or less, 12.0 or less, 11.0 or less, 10.0 or less, 9.5 or less, 9.0 or less, 8.5 or less, 8.0 or less, 7.5 or less, 7.0 or less, 6.5 or less, 6.0 or less, 5.5 or less, 4.0 or less, 3.5 or less, 3.0 or less, or 2.5 or less.

The second follower can be manufactured by the method described with regard to the first follower.

In particular, in the first aspect of the present invention, the viscosity of the second follower, which is measured under conditions of a temperature of 25°C and a shear rate of 50 s$^{-1}$, is not particularly limited as long as the above-mentioned viscosity difference ratio is satisfied, and may be 2 Pa·s or more, 3 Pa·s or more, 4 Pa·s or more, 5 Pa·s or more, 6 Pa·s or more, 7 Pa·s or more, 8 Pa·s or more, or 9 Pa·s or more, or may be 20 Pa·s or less, 18 Pa·s or less, 16 Pa·s or less, 15 Pa·s or less, 14 Pa·s or less, 13 Pa·s or less, or 12 Pa·s or less, for example.

In particular, in the first aspect of the present invention, the viscosity of the second follower, which is measured under conditions of a temperature of 25°C and a shear rate of 100 s$^{-1}$, is not particularly limited as long as the above-mentioned viscosity difference ratio is satisfied, and may be 1 Pa·s or more, 2 Pa·s or more, 3 Pa·s or more, 4 Pa·s or more, 5 Pa·s or more, 6 Pa·s or more, 7 Pa·s or more, 8 Pa·s or more, or 9 Pa·s or more, or may be 20 Pa·s or less, 18 Pa·s or less, 16 Pa·s or less, 15 Pa·s or less, 14 Pa·s or less, 13 Pa·s or less, or 12 Pa·s or less, for example.

The viscosity can be increased by increasing the content rate of the second thickening agent, for example.

<Other Configurations>

The liquid reservoir tube containing a liquid to be supplied of the present invention may include any other optional configuration. Examples of the other configurations may include a solid body such as a follower rod embedded in the follower. The follower rod may be present to be embedded in the multi-layer follower. More specifically, a plurality of follower rods may be present to be embedded in the followers forming the multi-layer follower. Alternatively, one follower rod may be embedded to pass through the multi-layer follower.

<<Second Aspect of Present Invention: Method of Manufacturing Liquid Reservoir Tube Containing Liquid to be supplied>>

A method of manufacturing a liquid reservoir tube containing a liquid to be supplied of the second aspect of the present invention includes:

filling the liquid to be supplied, the first follower, and the second follower into the liquid reservoir part in the stated order such that a gap between the first follower and the second follower is 15 mm or less; and
subjecting the liquid reservoir tube to centrifugal processing such that a centrifugal force is applied from the second follower toward the liquid to be supplied.

In conventional manufacturing of a liquid reservoir tube containing a liquid to be supplied, filling of the liquid to be supplied and one or a plurality of followers is performed while generating a gap therebetween to suppress the mixing thereof, and then centrifugal processing is performed.

In contrast, the present inventors have found that the above-mentioned meniscus height is achieved by performing filling the liquid to be supplied, the first follower, and the second follower while generating a gap of 15 mm between the first follower and the second follower, and have found that good drainability can be maintained and inversion of the follower can be suppressed by such a meniscus height after an impact.

<Filling>

The liquid to be supplied, the first follower, and the second follower are filled into the liquid reservoir part in the stated order such that a gap between the first follower and the second follower is 15 mm or less.

The gap is preferably 15 mm or less, 13 mm or less, 11 mm or less, 10 mm or less, 9 mm or less, 8 mm or less, 7 mm or less, or 6 mm or less in view of achieving the above-mentioned meniscus height, and is preferably 3 mm or more or 4 mm or more in view of preventing mixing of the first follower and the second follower.

<Centrifugal Processing>

The liquid reservoir tube is subjected to centrifugal processing such that a centrifugal force is applied from the second follower to the liquid to be supplied.

EXAMPLES

<<First Aspect of Present Invention>>

The first aspect of the present invention is specifically described with reference to examples and comparative examples, but the first aspect of the present invention is not limited thereto.

The first base oil and the first thickening agent of the types and amounts shown in Table 1 were kneaded while heating. Then, for those marked as "Yes" in the column "use of roll mill" in Table 1, the resultant was further kneaded by using a roll mill. The first follower was thus prepared.

Further, the second base oil and the second thickening agent of the types and amounts shown in Table 1 were kneaded by using a planetary mixer while heating. Then, for those marked as "Yes" in the column "use of roll mill" in Table 1, the resultant was further kneaded by using a roll mill. The second follower was thus prepared.

Details of the base oils shown in Table 1 are as follows.

Polybutene A: POLYBUTENE 015N available from NOF CORPORATION
Polybutene B: POLYBUTENE 30N available from NOF CORPORATION
Mineral oil A: DIANA PROCESS OIL PW-90 available from Idemitsu Kosan Co.,Ltd.
Mineral oil B: DIANA PROCESS OIL PW-90 available from Idemitsu Kosan Co.,Ltd.
Aromatics: BARREL PROCESS OIL B-05 available from Matsumura Oil Co., Ltd.
Paraffin: BARREL PROCESS OIL P-2200 available from Matsumura Oil Co., Ltd.
Silicone A: KF-54 available from Shin-Etsu Chemical Co., Ltd.
Silicone B: KF-96 available from Shin-Etsu Chemical Co., Ltd.

Details of the thickening agents shown in Table 1 are as follows.

Elastomer A: DYNARON 6200P available from JSR Corporation
Elastomer B: DYNARON 8300P available from JSR Corporation
Inorganic salt: lithium stearate
Silica A: AEROSIL R202 available from Evonik
Silica B: AEROSIL NY50L available from Evonik

An ink refill was prepared by enclosing the ink shown in the column "liquid to be supplied (ink)" in Table 1 as the liquid to be supplied, and then the first follower and the second follower in the stated order, in the liquid reservoir tube shown in Table 1. The filling lengths of the first follower and the second follower were as shown in Table 1.

The water-based ink indicates ink that uses water as a main solvent, contains at least a coloring agent, and is referred to as "water-based" in the column "liquid to be supplied (ink)" in Table 1.

In the column "liquid to be supplied (ink)" in Table 1, "gel" indicates ink that uses water as a main solvent and contains at least a coloring agent and a viscosity modifier.

In the column "liquid to be supplied (ink)" in Table 1, "oil-based" indicates ink that uses an organic solvent as a main solvent and contains at least a coloring agent.

In the column "storage tube" in Table 1, "PP" indicates a refill including an ink storage portion made of polypropylene (inner diameter of 5 mm).

In the column "storage tube" in Table 2, "metal" indicates a refill including an ink storage portion made of metal (inner diameter of 5 mm).

In the column "storage tube" in Table 2, "paper" indicates a refill including an ink storage portion including a paper layer as a base layer (inner diameter of 5 mm).

<<Evaluation>>

<Following Property>

The ink refill thus prepared was subjected to a continuous "spiral pattern writing test" on ISO-compliant writing paper by a writing tester until the ink was depleted (up to 1,000 m), and the drawn line thus obtained was checked. The test was conducted under writing conditions of a writing load of 100 gf, a writing angle of 60 degrees, and a writing speed of 9.0 mm/min. The evaluation criteria were as follows.

A: A good drawn line without skipping was obtained.
B: Skipping was observed in less than 1/4 of the drawn line.

C: Skipping was observed in 1/4 or more of the drawn line.

<Impact Resistance>

The ink refill thus obtained was loaded into a ballpoint pen, and was dropped from a height of 1 m with the nib facing upward. The condition of the follower was then checked by observing the refill from the outside or by cutting and opening the refill in the longitudinal direction and visually checking the state of the ink and the follower.

In Table 1, the impact resistance evaluation using a ballpoint pen without a knock mechanism at the rear end (UM-151 manufactured by MITSUBISHI PENCIL COMPANY, LIMITED) is referred to as "without knock," and the impact resistance evaluation using a ballpoint pen with a knock mechanism at the rear end (UMN-105 manufactured by MITSUBISHI PENCIL COMPANY, LIMITED) is referred to as "with knock." The evaluation criteria were as follows.

A: No ink was confirmed to be mixed into the follower.
B: The shape of the interface between the ink and the follower was deformed.
C: The ink penetrated through the inside of the follower.

Configurations and evaluation results of the examples and the comparative examples are shown in Tables 1 and 2.

[Table 1]

| | | | | Example A1 | Example A2 | Example A3 | Example A4 | Example A5 | Example A6 | Comparative Example A1 | Comparative Example A2 |
|---|---|---|---|---|---|---|---|---|---|---|---|
| Configuration | First follower | First base oil | Type | Silicone A | Silicone A | Silicone B | Silicone B | Silicone A | Silicone A | Silicone | Silicone B |
| | | | Content rate (mass%) | 95.4 | 97.1 | 96.8 | 97.0 | 98.5 | 93.8 | 98.1 | 98.1 |
| | | | Type | | | | | | | | |
| | | | Content rate (mass%) | | | | | | | | |
| | | First thickening agent | Type | Silica A | Silica A | Silica B | Silica B | Silica A | Silica A | Silica A | Silica A |
| | | | Content rate (mass%) | 4.6 | 2.9 | 3.2 | 3.0 | 1.5 | 4.1 | 1.9 | 1.9 |
| | | | Type | | | | | | Silica B | | |
| | | | Content rate (mass%) | | | | | | 2.1 | | |
| | | Use of roll mill | | Yes | Yes | Yes | No | Yes | Yes | No | No |
| | | Filling length (mm) | | 2 | 12 | 3 | 8 | 22 | 10 | 6 | 12 |
| | | Viscosity (Pa·s) | $100s^{-1}$ | 8.8 | 5.2 | 7.6 | 6.4 | 4.3 | 10.5 | 5.9 | 5.9 |
| | | | $50s^{-1}$ | 10.92 | 7.31 | 9.12 | 8.38 | 5.60 | 14.18 | 7.25 | 7.25 |
| | Second follower | Second base oil | Type | Polybutene B | Aromatic A | Polybutene A | PolybuteneA | Polybutene B | Paraffin | Polybutene A | - |
| | | | Content rate (mass%) | 40.0 | 94.6 | 30.0 | 82.0 | 20.0 | 97.0 | 71.8 | |
| | | | Type | Mineral oil A | | Mineral oil A | Mineral oil A | Mineral oil B | | Mineral oil B | |
| | | | Content rate (mass%) | 57.4 | | 65.7 | 15.0 | 74.6 | | 24.0 | |
| | | Second thickening agent | Type | Elastomer A | Inorganic salt | Elastomer B | Elastomer A | Elastomer A | Silica A | Elastomer B | |
| | | | Content rate (mass%) | 2.6 | 3.5 | 4.3 | 3.0 | 1.2 | 0.3 | 4.2 | |
| | | | Type | | Silica A | | | Elastomer B | Silica B | | |

(continued)

| | | Example A1 | Example A2 | Example A3 | Example A4 | Example A5 | Example A6 | Comparative Example A1 | Comparative Example A2 |
|---|---|---|---|---|---|---|---|---|---|
| Content rate (mass%) | | | 1.9 | | | 4.2 | 2.7 | | |
| Use of roll mill | | Yes | Yes | Yes | Yes | Yes | Yes | Yes | |
| Filling length (mm) | | 18 | 3 | 7 | 10 | 3 | 6 | 6 | |
| Viscosity (Pa·s) | 100s⁻¹ | 6.3 | 9.0 | 8.1 | 6.3 | 8.5 | 8.5 | 5.8 | |
| | 50s⁻¹ | 7.51 | 12.10 | 10.53 | 7.50 | 11.05 | 10.20 | 6.96 | |

[Table 2]

| Configuration | | | | Example A1 | Example A2 | Example A3 | Example A4 | Example A5 | Example A6 | Comparative Example A1 | Comparative Example A2 |
|---|---|---|---|---|---|---|---|---|---|---|---|
| Configuration | First follower | Viscosity (Pa·s) | 100s$^{-1}$ | 8.8 | 5.2 | 7.6 | 6.4 | 4.3 | 10.5 | 5.9 | 5.9 |
| | | | 50s$^{-1}$ | 10.92 | 7.31 | 9.12 | 8.38 | 6.03 | 14.18 | 7.25 | 7.25 |
| | Second follower | Viscosity (Pa·s) | 100s$^{-1}$ | 6.3 | 9.0 | 8.1 | 6.3 | 8.5 | 8.5 | 5.8 | - |
| | | | 50s$^{-1}$ | 7.51 | 12.10 | 10.53 | 7.50 | 11.05 | 10.20 | 6.96 | |
| | Viscosity difference ratio (%) | | 100s$^{-1}$ | 40.7 | 41.7 | 6.2 | 1.6 | 49.3 | 23.5 | 0.9 | - |
| | | | 50s$^{-1}$ | 45.4 | 39.6 | 13.4 | 11.8 | 45.7 | 39 | 4.2 | - |
| | Liquid to be supplied (ink) | | | Water-based | Water-based | Gel | Gel | Oil-based | Oil-based | Gel | Gel |
| | Storage tube | | | PP | Metal | PP | Paper | PP | Paper | PP | PP |
| Evaluation results | Following property | | | A | A | A | A | A | A | A | A |
| | Impact resistance | Without knock | | A | A | A | A | A | A | C | C |
| | | With knock | | A | A | A | A | A | A | B | B |

EP 4 656 406 A1

13

It can be understood from Tables 1 and 2 that, in each of the ink refills in Examples A1 to A6 in which the viscosity was set such that the viscosity difference ratio of the first follower with respect to the second follower under conditions of a temperature of 25°C and a shear rate of 50 s$^{-1}$ was 7% or more, a good following property and impact resistance were provided.

<<Second Aspect of Present Invention>>

The second aspect of the present invention is specifically described with reference to examples and comparative examples, but the second aspect of the present invention is not limited thereto.

The first base oil and the first thickening agent of the types and amounts shown in Table 3 were kneaded while heating. Then, for those marked as "Yes" in the column "use of roll mill" in Table 3, the resultant was further kneaded by using a roll mill. The first follower was thus prepared.

Further, the second base oil and the second thickening agent of the types and amounts shown in Table 3 were kneaded by using a planetary mixer while heating. Then, for those marked as "Yes" in the column "use of roll mill" in Table 3, the resultant was further kneaded by using a roll mill. The second follower was thus prepared.

Details of the base oils shown in Table 3 are as follows.

Polybutene: POLYBUTENE 30N available from NOF CORPORATION
Mineral oil: DIANA PROCESS OIL PW-90 available from Idemitsu Kosan Co.,Ltd.
Aromatics: BARREL PROCESS OIL B-05 available from Matsumura Oil Co., Ltd.
Paraffin: BARREL PROCESS OIL P-2200 available from Matsumura Oil Co., Ltd.
Silicone: KF-54 available from Shin-Etsu Chemical Co., Ltd.

Details of the thickening agents shown in Table 3 are as follows.

Elastomer: DYNARON 6200P available from JSR Corporation
Inorganic salt: lithium stearate
Silica: AEROSIL R202 available from Evonik

Into the liquid reservoir tube shown in Table 3, the ink shown in the column "liquid to be supplied (ink)" in Table 3 was filled as the liquid to be supplied, and then the first follower and the second follower were filled in the stated order such that the gap therebetween had the length shown in Table 3.

Then, an ink refill was prepared by subjecting the liquid reservoir tube to centrifugal processing such that a centrifugal force was applied from the second follower to the liquid to be supplied. The filling lengths of the first follower and the second follower were as shown in Table 3.

In the column "liquid to be supplied (ink)" in Table 3, "gel" indicates ink that uses water as a main solvent and contains at least a coloring agent and a viscosity modifier.

In the column "liquid to be supplied (ink)" in Table 3, "oil-based" indicates ink that uses an organic solvent as a main solvent and contains at least a coloring agent.

In the column "storage tube" in Table 3, "metal" indicates a refill including an ink storage portion made of metal (inner diameter of 5 mm).

In the column "storage tube" in Table 3, "PP" indicates a refill including an ink storage portion made of polypropylene (inner diameter of 5 mm).

In the column "storage tube" in Table 3, "paper" indicates a refill including an ink storage portion including a paper layer as a base layer (inner diameter of 5 mm).

<<Evaluation>>

The ink refill thus prepared was subjected to a knock impact or a drop impact, and then was evaluated as follows.

A knock impact was applied by attaching the ink refill thus prepared to a knock-type ballpoint pen (SXN-150 manufactured by MITSUBISHI PENCIL COMPANY, LIMITED) and knocking the ballpoint pen 100 times.

A drop impact was applied by attaching a weight of 10 g to the rear end of the ink refill thus obtained, and by dropping the ink refill from a height of 1 m with the nib facing upward.

<Drainability after Impact>

The ink refill to which an impact was applied was used to continue writing until the ink was completely depleted, and drainability was evaluated by observing the refill from the outside or by cutting and opening the refill in the longitudinal direction and visually checking the state of the ink and the follower. The evaluation criteria were as follows.

A: No ink adhesion to the inner wall was observed.
B: Ink adhesion on the inner wall of the refill was observed near the interface between the follower and the ink.
C: The area of ink adhesion was located above the position of the follower.

<Anti-Inversion Property after Impact>

The ink refill to which an impact was applied was left with the nib facing upward in an environment at 70°C for 10 days, and presence or absence of inversion of the ink and the follower was observed. Subsequently, an anti-inversion property was evaluated by observing the refill from the outside or by cutting and opening the refill in the longitudinal direction and visually checking the state of the ink and the follower. The evaluation criteria were as follows.

A: The shape of the interface between the followers remained unchanged.
B: The shape of the interface between the followers was deformed.
C: The first follower was clearly mixed into the second follower.

Configurations and evaluation results of the examples and the comparative examples are shown in Table 3.

[Table 3]

| | | | | Example B1 | Example B2 | Example B3 | Comparative Example B1 | Comparative Example B2 | Example B4 | Example B5 | Example B6 | Comparative Example B3 |
|---|---|---|---|---|---|---|---|---|---|---|---|---|
| Configuration | First follower | First base oil | Type | Silicone | Silicone | Silicone | Silicone | Silicone | Silicone | Silicone | Silicone | Silicone |
| | | | Content rate (mass%) | 95.2 | 95.2 | 95.2 | 95.2 | 95.2 | 94.5 | 94.5 | 94.5 | 94.5 |
| | | First thickening agent | Type | Silica | Silica | Silica | Silica | Silica | Silica | Silica | Silica | Silica |
| | | | Content rate (mass%) | 4.8 | 4.8 | 4.8 | 4.8 | 4.8 | 5.5 | 5.5 | 5.5 | 5.5 |
| | | Use of roll mill | | Yes | Yes | Yes | Yes | Yes | Yes | Yes | Yes | Yes |
| | | Filling length (mm) | | 7 | 10 | 5 | 8 | 7 | 10 | 6 | 12 | 8 |
| | Second follower | Second base oil | Type | Polybutene | Polybutene | Polybutene | Polybutene | Polybutene | Aromatic | Aromatic | Aromatic | Aromatic |
| | | | Content rate (mass%) | 40.0 | 40.0 | 40.0 | 40.0 | 40.0 | 94.4 | 94.4 | 94.4 | 94.4 |
| | | | Type | Mineral oil | Mineral oil | Mineral oil | Mineral oil | Mineral oil | | | | |
| | | | Content rate (mass%) | 54.2 | 54.2 | 54.2 | 54.2 | 54.2 | | | | |
| | | Second thickening agent | Type | Elastomer | Elastomer | Elastomer | Elastomer | Elastomer | Inorganic salt | Inorganic salt | Inorganic salt | Inorganic salt |
| | | | Content rate (mass%) | 4.8 | 4.8 | 4.8 | 4.8 | 4.8 | 2.6 | 2.6 | 2.6 | 2.6 |
| | | | Type | | | | | | Silica | Silica | Silica | Silica |
| | | | Content rate (mass%) | | | | | | 3.0 | 3.0 | 3.0 | 3.0 |
| | | Use of roll mill | | No | No | No | No | No | Yes | Yes | Yes | Yes |
| | | Filling length (mm) | | 8 | 6 | 12 | 5 | 9 | 5 | 8 | 5 | 7 |

(continued)

| | | | Example B1 | Example B2 | Example B3 | Comparative Example B1 | Comparative Example B2 | Example B4 | Example B5 | Example B6 | Comparative Example B3 |
|---|---|---|---|---|---|---|---|---|---|---|---|
| | Gap length between followers before centrifugal processing (mm) | | 5 | 6 | 8 | 20 | 24 | 5 | 6 | 9 | 22 |
| | Meniscus length of followers after centrifugal processing (mm) | | <1 | <1 | 2.2 | 3.4 | 4.5 | <1 | 1.2 | 2.2 | 3.8 |
| | Liquid to be supplied (ink) | | Gel | Gel | Oil-based | Oil-based | Gel | Gel | Oil-based | Gel | Oil-based |
| | Reservoir tube | | Metal | PP | PP | PP | PP | Paper | Paper | PP | Paper |
| Evaluation results | Drainability | After knock impact | A | A | A | B | B | A | A | A | B |
| | | After drop impact | A | A | A | B | B | A | A | A | B |
| | Anti-inversion property | After knock impact | A | A | A | B | B | A | A | A | B |
| | | After drop impact | A | A | A | B | B | A | A | A | B |

It can be understood from Table 3 that, in each of the ink refills in Examples B1 to B6 in which the meniscus height of the interface between the first follower and the second follower was 3 mm or less, good drainability was provided, and inversion of the follower was successfully suppressed even after an impact.

Further, it can be understood that the above-mentioned meniscus height was achieved when the gap between the first follower and the second follower during filling was 15 mm or less.

REFERENCE SIGNS LIST

100 Liquid reservoir tube containing a liquid to be supplied
10 Liquid supply part
20 Liquid reservoir part
30 Liquid to be supplied
40 Multi-layer follower
42 First follower
44 Second follower
X Meniscus height of interface between first follower and second follower

**Claims**

1. A liquid reservoir tube containing a liquid to be supplied, the liquid reservoir tube including a liquid supply part and a liquid reservoir part, wherein

   the liquid reservoir part includes: a liquid to be supplied in contact with the liquid supply part; and a multi-layer follower composed of a plurality of layers which are stored in the stated order from the liquid supply part side, the multi-layer follower includes at least a first follower and a second follower, the first follower being present on the liquid supply part side with respect to the second follower,
   a viscosity difference ratio of the first follower with respect to the second follower is 7% or more, and
   the viscosity difference ratio is calculated based on viscosity measured under conditions of a temperature of 25°C and a shear rate of 50 s$^{-1}$.

2. The liquid reservoir tube containing a liquid to be supplied according to Claim 1, wherein a viscosity difference ratio of the first follower with respect to the second follower is 1% or more, the viscosity difference ratio being measured under conditions of a temperature of 25°C and a shear rate of 100 s$^{-1}$.

3. The liquid reservoir tube containing a liquid to be supplied according to Claim 1 or 2, wherein the first follower is in contact with the liquid to be supplied.

4. The liquid reservoir tube containing a liquid to be supplied according to Claim 1 or 2, wherein the second follower is in contact with the first follower.

5. The liquid reservoir tube containing a liquid to be supplied according to Claim 1 or 2, wherein the multi-layer follower is composed of the first follower and the second follower.

6. The liquid reservoir tube containing a liquid to be supplied according to Claim 1 or 2, wherein an interface between the followers constituting the multi-layer follower is visible.

7. The liquid reservoir tube containing a liquid to be supplied according to Claim 1 or 2, wherein the first follower contains a first base oil, and the first base oil is at least one selected from the group consisting of silicone oil and fluorine oil.

8. The liquid reservoir tube containing a liquid to be supplied according to Claim 1 or 2, wherein the second follower contains a second base oil, and the second base oil is at least one selected from the group consisting of mineral oil, synthetic hydrocarbon oil, ester oil, and polyglycol oil.

9. The liquid reservoir tube containing a liquid to be supplied according to Claim 8, wherein the second base oil is at least one selected from the group consisting of polyolefin, liquid paraffin, and mineral oil.

10. The liquid reservoir tube containing a liquid to be supplied according to Claim 1 or 2, wherein the first follower further contains a first thickening agent being at least one selected from the group consisting of silica and inorganic salt particles.

11. The liquid reservoir tube containing a liquid to be supplied according to Claim 1 or 2, wherein the second follower contains a second thickening agent being at least one selected from the group consisting of elastomers.

12. A liquid reservoir tube containing a liquid to be supplied, the liquid reservoir tube including a liquid supply part and a liquid reservoir part, wherein

the liquid reservoir part includes: a liquid to be supplied in contact with the liquid supply part; and a multi-layer follower composed of a plurality of layers which are stored in the stated order from the liquid supply part side, the multi-layer follower includes at least a first follower and a second follower, the first follower being present on the liquid supply part side with respect to the second follower,
the second follower is in contact with the first follower, and
a meniscus height of an interface between the first follower and the second follower is 3 mm or less.

13. The liquid reservoir tube containing a liquid to be supplied according to Claim 12, wherein the first follower is in contact with the liquid to be supplied.

14. The liquid reservoir tube containing a liquid to be supplied according to Claim 12 or 13, wherein the multi-layer follower is composed of the first follower and the second follower.

15. The liquid reservoir tube containing a liquid to be supplied according to Claim 12 or 13, wherein an interface between the followers constituting the multi-layer follower is visible.

16. The liquid reservoir tube containing a liquid to be supplied according to Claim 12 or 13, wherein the first follower contains a first base oil, and the first base oil is at least one selected from the group consisting of silicone oil and fluorine oil.

17. The liquid reservoir tube containing a liquid to be supplied according to Claim 12 or 13, wherein the second follower contains a second base oil, and the second base oil is at least one selected from the group consisting of mineral oil, synthetic hydrocarbon oil, ester oil, and polyglycol oil.

18. The liquid reservoir tube containing a liquid to be supplied according to Claim 6, wherein the second base oil is at least one selected from the group consisting of polyolefin, liquid paraffin, and mineral oil.

19. The liquid reservoir tube containing a liquid to be supplied according to Claim 12 or 13, wherein the first follower further contains a first thickening agent being at least one selected from the group consisting of silica and inorganic salt particles.

20. The liquid reservoir tube containing a liquid to be supplied according to Claim 12 or 13, wherein the second follower contains a second thickening agent being at least one selected from the group consisting of elastomers.

21. A method of manufacturing the liquid reservoir tube containing a liquid to be supplied according to Claim 12 or 13, the method including:

filling the liquid to be supplied, the first follower, and the second follower into the liquid reservoir part in the stated order such that a gap between the first follower and the second follower is 15 mm or less; and
subjecting the liquid reservoir tube to centrifugal processing such that a centrifugal force is applied from the second follower toward the liquid to be supplied.

Fig. 1

Fig. 2

100

44

40

42

30

20

10

X

## INTERNATIONAL SEARCH REPORT

| International application No. |
| --- |
| **PCT/JP2024/001981** |

| A. | CLASSIFICATION OF SUBJECT MATTER |
| --- | --- |

***B43K 7/08***(2006.01)i; ***A45D 34/04***(2006.01)i; ***B43K 8/03***(2006.01)i
FI:   B43K7/08 100; B43K8/03; A45D34/04 530

According to International Patent Classification (IPC) or to both national classification and IPC

| B. | FIELDS SEARCHED |
| --- | --- |

Minimum documentation searched (classification system followed by classification symbols)

B43K7/08; A45D34/04; B43K8/03

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 10-315681 A (MITSUBISHI PENCIL CO., LTD.) 02 December 1998 (1998-12-02) paragraphs [0032]-[0040] | 1-10 |
| Y | paragraphs [0032]-[0040] | 11-21 |
| Y | JP 2021-154525 A (MITSUBISHI PENCIL CO., LTD.) 07 October 2021 (2021-10-07) paragraphs [0053]-[0058] | 11, 20 |
| Y | JP 8-090982 A (PILOT INK CO., LTD.) 09 April 1996 (1996-04-09) paragraphs [0009]-[0016] | 12-21 |
| Y | JP 2004-175083 A (PENTEL CORP.) 24 June 2004 (2004-06-24) paragraph [0027] | 21 |

☐ Further documents are listed in the continuation of Box C.   ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **25 March 2024** | **09 April 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**

International application No.

**PCT/JP2024/001981**

**Box No. III    Observations where unity of invention is lacking (Continuation of item 3 of first sheet)**

This International Searching Authority found multiple inventions in this international application, as follows:

(Invention 1) Claims 1-11
    Claims 1-11 have the special technical feature in which "the viscosity difference ratio between a first follower and a second follower is 7% or more, and the viscosity difference ratio is calculated from the viscosity measured under the conditions of a temperature of 25°C and a shear rate of 50 s$^{-1}$," and is thus classified as invention 1.

(Invention 2) Claims 12-21
    Claim 1 classified as invention 1 shares, with the invention in claims 12-21, the common technical feature of comprising a liquid supply section and a liquid accommodating section, wherein: the liquid accommodating section sequentially accommodates, from the liquid supply section side, a liquid to be supplied in contact with the liquid supply section and a multi-layer follower composed of a plurality of layers; the multi-layer follower includes at least the first follower and the second follower; and the first follower is located closer to the liquid supply section side than the second follower.
    However, said technical feature does not make a contribution over the prior art, and thus it cannot be said that the technical feature is a special technical feature. Also, there are no other the same as or corresponding special technical features between these inventions.
    In addition, claims 12-21 are not dependent on claim 1. Furthermore, claims 12-21 are not substantially identical to or similarly closely related to any of the claims classified as invention 1.
    Therefore, claims 12-21 cannot be classified as invention 1.    In addition, claims 12-21 have the special technical feature of in which the meniscus height of the interface between the first follower and the second follower is 3 mm or less, and are thus classified as invention 2.

1. ☑ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**    ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☑ No protest accompanied the payment of additional search fees.

Form PCT/ISA/210 (continuation of first sheet) (July 2022)

INTERNATIONAL SEARCH REPORT
Information on patent family members

International application No.

**PCT/JP2024/001981**

| Patent document cited in search report | | | Publication date (day/month/year) | Patent family member(s) | Publication date (day/month/year) |
|---|---|---|---|---|---|
| JP | 10-315681 | A | 02 December 1998 | (Family: none) | |
| JP | 2021-154525 | A | 07 October 2021 | (Family: none) | |
| JP | 8-090982 | A | 09 April 1996 | (Family: none) | |
| JP | 2004-175083 | A | 24 June 2004 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H6328890 A
- JP 2001158869 A
- JP 2005239918 A

- JP 2017165670 A
- JP 2016198395 A
- JP 2004281340 A